# FASCICULE DE BREVET EUROPEEN

(11) **EP 4 451 184 B1**
(45) Date de publication et mention de la délivrance du brevet: **11.11.2026**
(21) Numéro de dépôt: 24170449.3
(22) Date de dépôt: 16.04.2024
(51) Int. Cl.: G06Q 10/06

(54) **PROCEDE DE GESTION D'UN GANT**
VERFAHREN ZUR VERWALTUNG EINES HANDSCHUHS
METHOD FOR MANAGING A GLOVE

(30) Priorité: 20.04.2023 FR 2303966
(43) Date de publication de la demande: 23.10.2024
(73) Titulaire: Piercan, 14520 Port en Bessin (FR)
(72) Inventeur: ARETHUSE, Franck, 72000 LE MANS (FR); CHARRIN, Philippe, 69100 VILLEURBANNE (FR)
(74) Mandataire: Cabinet Le Guen Maillet

(56) Documents cités:
- EP-A1- 3 648 047
- WO-A1-2013/092882
- FR-A1- 2 864 235

## Description

### DOMAINE TECHNIQUE

L'invention concerne le domaine des gants, et plus particulièrement le domaine des gants utilisés dans des boites à gants et isolateurs.

### ETAT DE LA TECHNIQUE ANTERIEURE

D'une manière connue, une boite à gants ou un isolateur est un dispositif clos se présentant sous la forme d'une boite dans laquelle pénètrent des gants.

Les gants sont liés de manière étanche à la boite à gants, pour que le contenu de la boite à gants soit isolé de l'extérieur.

Les boites à gants sont principalement utilisées dans le domaine de la recherche et industrie nucléaire et dans le domaine de l'industrie et la recherche pharmaceutique.

Dans le domaine nucléaire, les boites à gants peuvent être utilisées pour manipuler des matériaux radioactifs.

Dans le domaine pharmaceutique, les boites à gants sont nommées isolateurs. Ces isolateurs peuvent être utilisés pour manipuler des germes (virus et/ou bactéries) ou produire des médicaments, vaccins et tous produits stériles.

En fonction de l'usage des gants, des risques et de l'environnement dans la boite à gants, il est nécessaire de changer le gant au bout d'une période donnée.

Dans un contexte industriel, lorsque de nombreuses boites à gants sont utilisées en continu, les gants peuvent être remplacés tous en même temps pour faciliter la gestion du parc de gants. Un des inconvénients de cette règle de gestion est de surconsommer des gants.

En effet, une telle gestion ne tient pas compte de l'usage fait avec chaque gant, ce qui peut amener à changer un gant encore conforme. A l'inverse, l'absence de traçabilité peut engendrer des risques pour les utilisateurs.

Dans ce contexte, il est nécessaire de fournir un procédé de gestion d'au moins un gant permettant de déterminer et de signaler la date de remplacement du gant. EP 3 648 047 A1 porte sur un système de gant/consignation destiné à enregistrer et à stocker, de façon sérielle dans le temps, le nom de l'opérateur ainsi que l'état d'utilisation d'un gant de travail employé dans un dispositif tel qu'un isolateur ou une boîte à gants. WO 2013/092882 A1 se rapporte à une installation comportant une boite à gants, un dispositif de changement de gant ou d'objets fixés sur la boîte à gants, dans laquelle la traçabilité desdits objets est améliorée. FR 2 864 235 A1 concerne un système de test pour mesurer l'étanchéité de gants, notamment dans des installations

### EXPOSE DE L'INVENTION

A cet effet, selon un premier aspect, il est proposé un procédé de gestion d'au moins un gant comprenant une étiquette d'identification par au moins un terminal comprenant un écran d'affichage et de la circuiterie électronique pour implémenter le procédé de gestion. Le procédé comprend les étapes suivantes :
- associer l'étiquette d'identification au gant avec le terminal ;
- acquérir des informations d'identification du gant ;
- programmer la durée d'utilisation du gant ;
- décompter la durée d'utilisation et afficher le décompte sur l'écran du premier terminal ;
- émettre un signal d'alarme à la fin du décompte.

Ainsi, le procédé selon l'invention permet de décompter simplement et de manière fiable une durée d'utilisation d'un gant. D'une manière particulièrement avantageuse, l'émission d'un signal d'alarme permet de signaler simplement la fin de la durée d'utilisation du gant. Cette disposition est particulièrement pratique lorsque plusieurs gants sont gérés en même temps. Ainsi, chaque gant peut être remplacé à la fin de sa durée effective d'utilisation, sans que tous les gants utilisés soient nécessairement remplacés en même temps.

Selon une disposition particulière, lors de l'acquisition d'informations d'identification du gant, le terminal acquiert un historique d'utilisation du gant ; et lors de l'émission d'un signal d'alarme le terminal indique si le gant doit être lavé, et/ou contrôlé, ou jeté, en fonction de l'historique acquis.

Selon une disposition particulière, la durée d'utilisation du gant est déterminée en fonction d'un usage du gant, le terminal affichant au moins un usage sélectionnable pour le gant.

Selon une disposition particulière, l'étape consistant à associer l'étiquette d'identification est réalisée en utilisant un lecteur optique.

Selon une disposition particulière, l'étape consistant à associer l'étiquette d'identification est réalisée en utilisant un émetteur-récepteur ultra haute fréquence.

Selon une disposition particulière, pour un même gant, le procédé est implémenté par deux terminaux.

Selon un autre aspect, il est proposé un ensemble de gestion d'au moins un gant, pour implémenter le procédé selon l'invention. L'ensemble de gestion comprend au moins :
(i) un gant comprenant une étiquette d'identification ;
(ii) au moins un terminal comprenant un organe de détection de l'étiquette d'identification et comprenant au moins un écran pour afficher le décompte d'utilisation.

Selon une disposition particulière, l'organe de détection comprend un lecteur optique pour lire l'étiquette d'identification du gant et l'associer au terminal et/ou comprend un émetteur-récepteur ultra haute fréquence pour détecter l'étiquette d'identification du gant et l'associer au terminal.

Selon une disposition particulière, l'étiquette d'identification du gant comprend un code-barres bidimensionnel et/ou une puce de radio-identification ultra haute fréquence.

Selon une disposition particulière, l'écran du terminal est un écran à encre électronique.

Selon une disposition particulière, le terminal comprend une cellule photovoltaïque et une réserve d'énergie électrique permettant d'alimenter en électricité le terminal.

Selon un autre aspect, il est proposé un produit programme d'ordinateur comprenant des instructions de code de programme pour exécuter le procédé selon l'invention, lorsque lesdites instructions sont exécutées par au moins un processeur.

Selon un autre aspect, il est proposé un support de stockage non transitoire sur lequel est stocké un programme d'ordinateur comprenant des instructions de code de programme pour exécuter le procédé selon l'invention, lorsque lesdites instructions sont lues depuis ledit support de stockage non transitoire et exécutées par un processeur.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un procédé de gestion d'un gant ;
[Fig. 2] illustre schématiquement un ensemble de gestion d'un gant ;

### EXPOSE DETAILLE DE MODES DE REALISATION

### Procédé de gestion

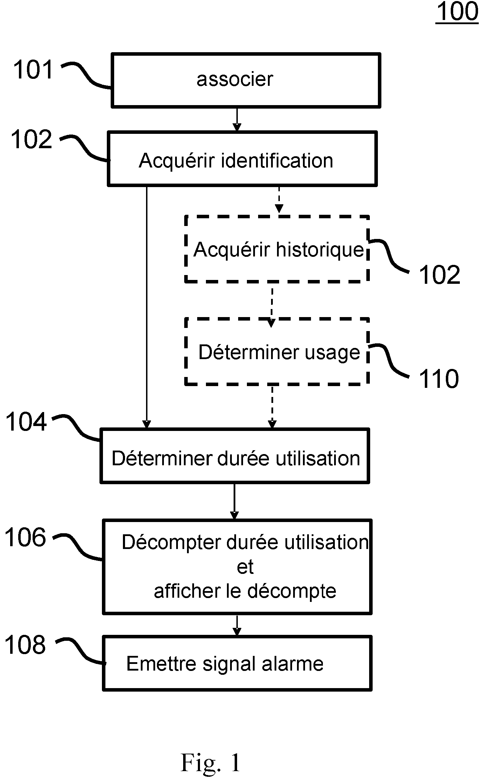

En référence à la Fig. 1, selon un premier aspect, il est proposé un procédé 100 de gestion d'au moins un gant 2 comprenant une étiquette d'identification 4 par au moins un terminal 6 comprenant un écran 8 d'affichage et de la circuiterie électronique 200 pour implémenter le procédé de gestion.

Le procédé 100 comprend notamment les étapes suivantes :
- associer 101 l'étiquette d'identification 4 du gant 2 avec le terminal 6 ;
- acquérir 102 des informations d'identification du gant 2 ;
- déterminer 104 une durée d'utilisation du gant 2 ;
- décompter 106 la durée d'utilisation et afficher le décompte sur l'écran 8 du terminal 6 ;
- émettre 108 un signal d'alarme à la fin du décompte.

### Association - étape 101

Le procédé comprend une étape 101 consistant à associer l'étiquette d'identification 4 du gant 2 avec le terminal 6.

L'association est réalisée en utilisant un organe 10 de détection. Typiquement, l'organe 10 de détection utilisé est un lecteur optique lorsque l'étiquette d'identification 4 est un marquage optique tel qu'un code barre bidimensionnel.

Selon une autre disposition particulière, l'organe 10 de détection peut être un émetteur-récepteur ultra haute fréquence (abrégé par l'acronyme UHF). Ce type d'association est aussi appelé radio-identification (abrégé par l'acronyme RFID de l'anglais Radio Frequency Identification). Cette méthode d'association est utilisée lorsque l'étiquette d'identification 4 est une puce de radio-identification ultra haute fréquence. La radio-identification présente l'avantage de pouvoir être effectuée à distance. D'une manière particulièrement avantageuse, l'utilisation d'une puce de radio-identification ultra haute fréquence permet d'effectuer la radio-identification à une distance plus importante qu'avec une puce de radio-identification basse fréquence. En outre, cette méthode d'association présente l'avantage d'être quasi-automatique si le gant 2 se trouve à portée de l'émetteur-récepteur ultra haute fréquence du terminal 6. Dès que le terminal 6 détecte la puce de radio-identification, il peut associer le gant 2. En outre, la technologie de radio-identification ultra haute fréquence est une technologie standardisée qui permet d'utiliser un organe 10 de détection standard pour détecter la puce de radio-identification.

Il est précisé que les deux méthodes d'association peuvent être combinées si un gant 2 présente un marquage optique et/ou une puce de radio-identification.

### Acquérir des informations d'identification- étape 102

Après l'association du gant 2 au terminal 6, le terminal 6 acquiert (étape 102) des informations d'identification du gant 2. A minima, les informations d'identification contiennent un numéro de série ou un numéro de lot permettant d'identifier le gant 2. D'une manière particulièrement avantageuse, les informations d'indentification sont récupérées directement dans la puce de radio-identification ultra haute fréquence, sans qu'il ne soit nécessaire de télécharger des données depuis un réseau externe de type Internet.

Selon une disposition particulièrement avantageuse, lors de l'acquisition d'informations, le terminal 6 acquiert aussi un historique (étape 110) d'utilisation du gant 2. Tel que cela sera détaillé ci-après, l'acquisition de l'historique d'utilisation du gant 2 permet, par exemple, de déterminer si le gant 2 peut être lavé ou doit être contrôlé ou jeté. En outre, l'acquisition de l'historique d'utilisation du gant 2 permet de déterminer si un gant a déjà fait l'objet de réparations, ce qui peut modifier les applications pour lesquelles le gant 2 est utilisable, et modifier la durée d'utilisation du gant 2.

Il est précisé que dans le présent document, par lavé il est entendu nettoyé et/ou décontaminé. De même, il est précisé, que par contrôle, il est entendu un contrôle d'intégrité et/ou un contrôle de fin de vie.

### Détermination d'une durée d'utilisation - étape 104

Comme indiqué précédemment, après avoir associé (étape 101) le gant 2 au terminal 6, le terminal 6 détermine (étape 104) une durée d'utilisation pour le gant 2.

Selon une disposition particulière, il est possible que la durée d'utilisation soit une durée prédéterminée et constante. En d'autres termes, il est possible que la durée d'utilisation soit toujours la même. Cette disposition est particulièrement avantageuse dans le cas où le gant 2 est utilisé toujours pour le même usage, comme par exemple manipuler toujours le même matériau radioactif. Selon cette disposition, il est possible de définir une fois, une durée d'utilisation qui sera appliquée à chaque gant 2 associé au terminal 6.

Selon une autre disposition particulière, la durée d'utilisation du gant 2 est déterminée en fonction d'un usage du gant 2, le terminal 6 affichant au moins un usage sélectionnable pour le gant 2. En d'autres termes, selon cette disposition particulière, plusieurs usages sont préprogrammés dans le terminal 6. Chaque usage différent correspond à un type de matière manipulée avec le gant 2, et donc chaque usage différent correspond à une durée d'utilisation différente.

Selon cette disposition, à l'étape 104, le terminal 6 affiche une liste d'usages différents qui ont été programmés. Un utilisateur choisit un usage pour le gant 2 associé et le terminal 6 détermine alors la durée d'utilisation du gant 2.

Selon une disposition particulière, le terminal 6 acquiert des données supplémentaires (captées par des capteurs supplémentaires liés au terminal 6), telles que la température et l'hygrométrie, pour déterminer la durée d'utilisation du gant 2.

### Décompte de la durée d'utilisation - étape 106

Après avoir déterminé (étape 104) la durée d'utilisation, le terminal 6 affiche (étape 106) un décompte de la durée d'utilisation.

Selon une disposition particulière, l'affichage (étape 106) du décompte est mis à jour en continu sur le terminal 6.

Selon une autre disposition particulière, l'affichage (étape 106) du décompte est mis à jour selon un pas de temps prédéterminé (par exemple toute les heures). Cette disposition est particulièrement avantageuse pour économiser de l'énergie. En effet, la modification de l'affichage du décompte est consommatrice d'énergie. Ainsi, réduire le nombre de modifications d'affichage en appliquant un pas de temps prédéterminé permet de diminuer la consommation d'énergie du terminal (par rapport à une modification en continu de l'affichage). Cette disposition est particulièrement avantageuse lorsque le terminal utilise un écran à encre électronique.

### Emission d'une alarme - étape 108

A l'issue du décompte de durée d'utilisation le terminal 6 émet (étape 108) une alarme.

Selon une disposition particulière, l'alarme est une alarme visuelle sur l'écran 8 du terminal 6. Selon une autre disposition particulière, l'alarme est aussi un signal sonore.

En sus, si un historique d'utilisation a été préalablement acquis à l'étape 102, le signal d'alarme indique si le gant 2 peut être nettoyé ou doit être contrôlé ou jeté.

Cette disposition est particulièrement avantageuse. En effet, l'association du gant 2 au terminal 6 permet de conserver un historique de tous les précédents usages du gant 2. Ainsi, selon une disposition particulière, l'historique d'utilisation du gant 2 est pris en compte pour déterminer si le gant 2 doit être jeté, ou peut être contrôlé et/ou lavé.

Selon une disposition particulièrement avantageuse, la puce de radio-identification ultra haute fréquence est inscriptible. Ainsi, lors de l'émission de l'alarme, le terminal 6 enregistre dans la puce de radio-identification ultra haute fréquence un nouvel historique d'utilisation tenant compte de la dernière utilisation réalisée.

### Utilisation d'un deuxième terminal

Selon une disposition particulière, le procédé 100 est implémenté simultanément par deux terminaux 6. Cette disposition permet, par exemple, d'utiliser un premier terminal 6 maintenu à proximité du gant 2, et un deuxième terminal 6 peut, par exemple, être mobile.

Cette disposition est particulièrement avantageuse pour gérer un grand nombre de gants 2. Ainsi, il est possible d'utiliser en combinaison, des terminaux distincts dédiés chacun à un gant, et d'utiliser aussi un ou plusieurs terminaux associés en parallèle à plusieurs gants. En condition d'utilisation des gants 2 dans des boites à gants 12, cette disposition permet d'avoir un terminal 6 à proximité d'une boite à gants 12, qui affiche le décompte d'utilisation du gant 2 présent dans la boite à gants 12. De plus, dans les mêmes conditions d'utilisation, cette disposition permet d'avoir un autre terminal 6 mobile qui est associé à plusieurs gants 2.

### Ensemble de gestion d'au moins un gant

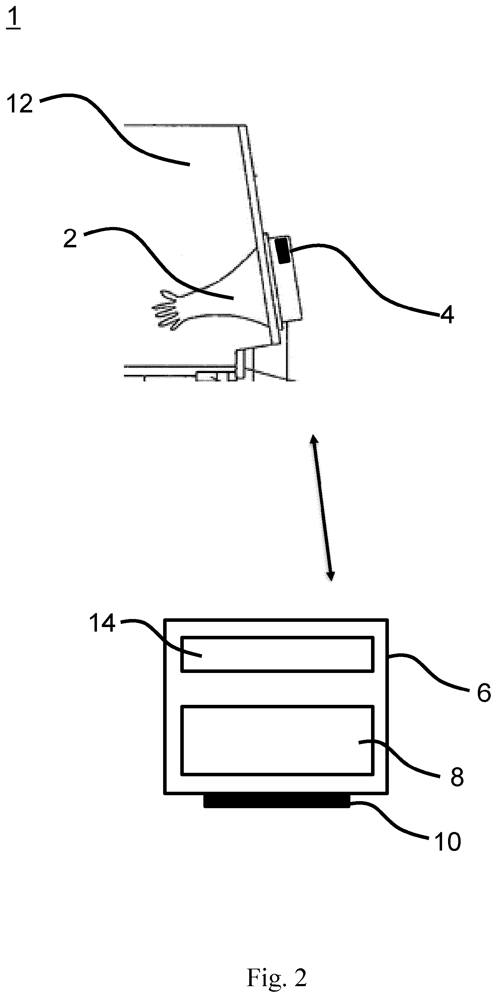

En référence à la Fig. 2, selon un autre aspect, il est proposé un ensemble 1 de gestion d'au moins un gant 2, pour implémenter le procédé 100 de gestion.

L'ensemble 1 de gestion comprend au moins :
(i) un gant 2 comprenant une étiquette d'identification 4 ;
(ii) au moins un terminal 6 comprenant un organe 10 de détection de l'étiquette d'indentification 4 et comprenant au moins un écran 8 pour afficher le décompte d'utilisation.

Il est précisé que le gant 2 peut être une manchette.

### Etiquette d'identification

Le gant 2 comprend une étiquette d'identification 4.

Selon une disposition particulière l'étiquette d'identification 4 du gant 2 comprend un code-barres bidimensionnel. Selon une disposition particulière, le code-barres bidimensionnel est imprimé sur le gant 2 selon un procédé de dépôt de jet d'encre. Selon une disposition encore plus particulière, un prétraitement au plasma ou par effet Corona est réalisé sur le gant 2 avant de réaliser l'impression du code-barres par dépôt de jet d'encre.

Selon une autre disposition particulière, l'étiquette d'identification 4 comprend une puce de radio-identification ultra haute fréquence.

Il est précisé que l'étiquette d'identification 4 peut comprendre en combinaison un code-barres bidimensionnel et une puce de radio-identification ultra haute fréquence.

Selon une disposition particulière, l'étiquette d'identification 4 est ajoutée sur le gant 2 après une étape de vulcanisation du gant 2.

Selon une disposition particulière, l'étiquette d'identification 4 est durcie pour résister aux rayonnements gammas.

### Terminal

Selon une disposition particulière le terminal 6 comprend un organe 10 de détection.

Selon une disposition particulière, l'organe 10 de détection comprend un lecteur optique pour lire l'étiquette d'identification 4 du gant 2 et l'associer au terminal 6 et/ou comprend un émetteur-récepteur ultra haute fréquence pour détecter l'étiquette d'identification 4 du gant 2 et l'associer au terminal 6. Comme indiqué précédemment, l'utilisation d'un émetteur-récepteur ultra haute fréquence permet d'associer, à distance, un gant 2 au terminal 6.

Selon une disposition particulièrement avantageuse, l'écran 8 du terminal 6 est un écran 8 à encre électronique. Cette disposition permet d'utiliser peu d'énergie pour l'affichage sur l'écran 8.

Selon une autre disposition particulière, le terminal 6 comprend une cellule photovoltaïque 14 et une réserve d'énergie électrique (non représentée) permettant d'alimenter en électricité le terminal 6. Cette disposition est particulièrement avantageuse car elle permet au terminal 6 d'être énergétiquement autonome.

Selon une autre disposition particulière, le terminal 6 est durci aux rayons gamma. En d'autres termes, selon cette disposition, le terminal 6 est adapté pour résister aux rayonnements gamma.

Il est précisé que le terminal 6 peut être positionné à l'intérieur ou à l'extérieur de la boite à gants 12.

### Système informatique

En outre, le terminal comprend un système informatique 200 comprenant de la circuiterie électronique configurée pour implémenter un procédé.

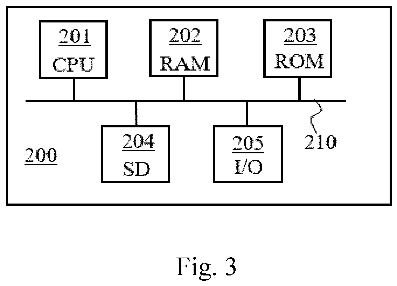

Tel que schématisé sur la Fig. 3, le système informatique 200 peut comporter, reliés par un bus de communication 210 : un processeur 201 ; une mémoire vive 202 ; une mémoire morte 203, par exemple de type ROM (« Read Only Memory » en anglais) ou EEPROM (« Electrically-Erasable Programmable Read Only Memory » en anglais) ; une unité de stockage 204, telle qu'un disque dur HDD (« Hard Disk Drive » en anglais), ou un lecteur de support de stockage, tel qu'un lecteur de cartes SD (« Secure Digital » en anglais) ; et un gestionnaire d'interfaces d'entrées-sorties 205.

Le processeur 201 est capable d'exécuter des instructions chargées dans la mémoire vive 202 à partir de la mémoire morte 203, d'une mémoire externe, d'un support de stockage (tel qu'une carte SD), ou d'un réseau de communication. Lorsque le système informatique 200 est mis sous tension, le processeur 201 est capable de lire de la mémoire vive 202 des instructions et de les exécuter. Ces instructions forment un programme d'ordinateur permettant l'implémentation, par le processeur 201, du procédé et des étapes décrits ici.

Tout ou partie du procédé et des étapes décrits ci-avant peut ainsi être implémenté sous forme logicielle par exécution d'un ensemble d'instructions par une machine programmable, par exemple un processeur de type DSP (« Digital Signal Processor » en anglais) ou un microcontrôleur, ou être implémenté sous forme matérielle par une machine ou un composant dédié, par exemple un composant FPGA (« Field Programmable Gate Array » en anglais) ou ASIC (« Application-Specific Integrated Circuit » en anglais). D'une manière générale, le système informatique 200 comporte de la circuiterie électronique adaptée et configurée pour implémenter, sous forme logicielle et/ou matérielle, les procédé et étapes décrits ci-avant en relation avec le système informatique 200 en question.

### Produit programme d'ordinateur et support de stockage

Selon un autre aspect, il est proposé un produit programme d'ordinateur comprenant des instructions de code de programme pour exécuter le procédé 100, lorsque lesdites instructions sont exécutées par au moins un processeur 201.

Selon un autre aspect, il est proposé un support de stockage non transitoire sur lequel est stocké un programme d'ordinateur comprenant des instructions de code de programme pour exécuter le procédé 100, lorsque lesdites instructions sont lues depuis ledit support de stockage non transitoire et exécutées par un processeur 201.

## Revendications

1. Procédé (100) de gestion d'au moins un gant (2) comprenant une étiquette d'identification (4) par au moins un terminal (6) comprenant un écran (8) d'affichage et de la circuiterie électronique (200) pour implémenter le procédé (100) de gestion, le procédé (100) étant **caractérisé en ce qu'**il comprend les étapes suivantes :
- associer (101) l'étiquette d'identification (4) du gant (2) avec le terminal (6) ;
- acquérir (102) des informations d'identification du gant (2);
- déterminer (104) une durée d'utilisation du gant (2) en fonction d'un usage du gant (2), le terminal (6) affichant au moins un usage sélectionnable pour le gant (2) ;
- décompter (106) la durée d'utilisation et afficher le décompte sur l'écran (8) du terminal (6) ;
- émettre (108) un signal d'alarme à la fin du décompte.

2. Procédé (100) selon la revendication 1, dans lequel lors de l'acquisition (102) d'informations d'identification du gant (2), le terminal (6) acquiert un historique d'utilisation du gant (2) ; et lors de l'émission (108) d'un signal d'alarme le terminal (6) indique si le gant (2) doit être lavé, et/ou contrôlé, ou jeté, en fonction de l'historique acquis.

3. Procédé (100) selon l'une quelconque des revendications précédentes, dans lequel l'étape (101) consistant à associer l'étiquette d'identification est réalisée en utilisant un lecteur optique.

4. Procédé (100) selon l'une quelconque des revendications précédentes, dans lequel l'étape (101) consistant à associer l'étiquette d'identification est réalisée en utilisant un émetteur-récepteur ultra haute fréquence.

5. Procédé (100) selon l'une quelconque des revendications précédentes, dans lequel pour un même gant (2), le procédé (100) est implémenté par deux terminaux (6).

6. Ensemble (1) de gestion d'au moins un gant (2), pour implémenter le procédé (100) selon l'une quelconque des revendications 1 à 6, l'ensemble (1) de gestion comprenant au moins :
(i) un gant (2) comprenant une étiquette d'identification (4) ;
(ii) au moins un terminal (6) comprenant un organe (10) de détection de l'étiquette d'identification (4) et comprenant au moins un écran (8) pour afficher le décompte d'utilisation et l'usage selectionnable pour le gant (2).

7. Ensemble (1) selon la revendication 7, dans lequel l'organe (10) de détection comprend un lecteur optique pour lire l'étiquette d'identification (4) du gant (2) et l'associer au terminal (6) et/ou comprend un émetteur-récepteur ultra haute fréquence pour détecter l'étiquette d'identification du gant (2) et l'associer au terminal.

8. Ensemble (1) selon l'une quelconque des revendications 7 ou 8, dans lequel l'étiquette d'identification (4) du gant (2) comprend un code-barres bidimensionnel et/ou une puce de radio-identification ultra haute fréquence.

9. Ensemble (1) selon l'une quelconque des revendications 7 à 9, dans lequel l'écran (8) du terminal est un écran (8) à encre électronique.

10. Ensemble selon l'une quelconque des revendications 7 à 10, dans lequel le terminal (6) comprend une cellule photovoltaïque (14) et une réserve d'énergie électrique permettant d'alimenter en électricité le terminal (6).

11. Produit programme d'ordinateur comprenant des instructions de code de programme pour exécuter le procédé (100) selon l'une quelconque des revendications 1 à 6, lorsque lesdites instructions sont exécutées par au moins un processeur (201).

12. Support de stockage non transitoire sur lequel est stocké un programme d'ordinateur comprenant des instructions de code de programme pour exécuter le procédé (100) selon l'une quelconque des revendications 1 à 6, lorsque lesdites instructions sont lues depuis ledit support de stockage non transitoire et exécutées par un processeur (201).

## Patentansprüche

1. Verfahren (100) zur Verwaltung wenigstens eines Handschuhs (2), der ein Identifizierungsetikett (4) umfasst, durch wenigstens ein Endgerät (6), das einen Anzeigebildschirm (8) und eine elektronische Schaltung (200) zur Implementierung des Verwaltungsverfahrens (100) umfasst, wobei das Verfahren (100) **dadurch gekennzeichnet ist, dass** es die folgenden Schritte umfasst:
- Zuordnen (101) des Identifizierungsetiketts (4) des Handschuhs (2) zu dem Endgerät (6);
- Erfassen (102) der Identifizierungsinformationen des Handschuhs (2);
- Bestimmen (104) einer Gebrauchsdauer des Handschuhs (2) in Abhängigkeit von einer Benutzung des Handschuhs (2), wobei das Endgerät (6) wenigstens eine auswählbare Benutzung für den Handschuh (2) anzeigt;
- Herunterzählen (106) der Gebrauchsdauer und Anzeigen des Countdowns auf dem Bildschirm (8) des Endgeräts (6);
- Abgeben (108) eines Alarmsignals am Ende des Countdowns.

2. Verfahren (100) nach Anspruch 1, wobei beim Erfassen (102) von Identifizierungsinformationen des Handschuhs (2) das Endgerät (6) eine Benutzungshistorie des Handschuhs (2) erfasst; und beim Abgeben (108) eines Alarmsignals das Endgerät (6) in Abhängigkeit von der erfassten Historie angibt, ob der Handschuh (2) gewaschen und/oder kontrolliert oder weggeworfen werden muss.

3. Verfahren (100) nach einem der vorhergehenden Ansprüche, wobei der Schritt (101), der darin besteht, das Identifizierungsetikett zuzuordnen, unter Verwendung eines optischen Lesegeräts durchgeführt wird.

4. Verfahren (100) nach einem der vorhergehenden Ansprüche, wobei der Schritt (101), der darin besteht, das Identifizierungsetikett zuzuordnen, unter Verwendung eines Ultrahochfrequenz-Sendeempfängers durchgeführt wird.

5. Verfahren (100) nach einem der vorhergehenden Ansprüche, wobei für ein und denselben Handschuh (2) das Verfahren (100) durch zwei Endgeräte (6) implementiert wird.

6. Anordnung (1) zur Verwaltung wenigstens eines Handschuhs (2) zur Implementierung des Verfahrens (100) nach einem der Ansprüche 1 bis 6, wobei die Verwaltungsanordnung (1) wenigstens Folgendes umfasst:
(i) einen Handschuh (2), der ein Identifizierungsetikett (4) umfasst;
(ii) wenigstens ein Endgerät (6), das ein Element (10) zur Detektion des Identifizierungsetiketts (4) umfasst und wenigstens einen Bildschirm (8) zur Anzeige des Benutzungs-Countdowns und die auswählbare Benutzung für den Handschuh (2) anzeigt.

7. Anordnung (1) nach Anspruch 7, wobei das Detektionselement (10) ein optisches Lesegerät umfasst, um das Identifizierungsetikett (4) des Handschuhs (2) zu lesen und es dem Endgerät (6) zuzuordnen und/oder einen Ultrahochfrequenz-Sendeempfänger umfasst, um das Identifizierungsetikett des Handschuhs (2) zu detektieren und es dem Endgerät zuzuordnen.

8. Anordnung (1) nach einem der Ansprüche 7 oder 8, wobei das Identifizierungsetikett (4) des Handschuhs (2) einen zweidimensionalen Strichcode und/oder einen Chip zur Identifizierung über Funk mittels Ultrahochfrequenz umfasst.

9. Anordnung (1) nach einem der Ansprüche 7 bis 9, wobei der Bildschirm (8) des Endgeräts ein Bildschirm (8) mit elektronischer Tinte ist.

10. Anordnung nach einem der Ansprüche 7 bis 10, wobei das Endgerät (6) eine Photovoltaikzelle (14) und eine Reserve elektrischer Energie, die es ermöglicht, das Endgerät (6) mit elektrischer Energie zu versorgen, umfasst.

11. Computerprogrammprodukt umfassend Programmcode-Anweisungen zur Ausführung des Verfahrens (100) nach einem der Ansprüche 1 bis 6, wenn die Anweisungen von wenigstens einem Prozessor (201) ausgeführt werden.

12. Nichtflüchtiges Speichermedium, auf dem ein Computerprogramm gespeichert ist, das Programmcode-Anweisungen umfasst, um das Verfahren (100) nach einem der Ansprüche 1 bis 6 auszuführen, wenn die Anweisungen von dem nichtflüchtigen Speichermedium gelesen und von einem Prozessor (201) ausgeführt werden.

## Claims

1. Method (100) for managing at least one glove (2) comprising a tag (4) for identification by at least one terminal (6) comprising a display screen (8) and electronic circuitry (200) for implementing the management method (100), the method (100) being **characterised in that** it comprises the following steps:
- associating (101) the identification tag (4) of the glove (2) with the terminal (6);
- acquiring (102) information identifying the glove (2);
- determining (104) a duration of use of the glove (2) according to a usage of the glove (2), the terminal (6) displaying at least one selectable usage for the glove (2);
- counting (106) the duration of use and displaying the count on the screen (8) of the terminal (6);
- emitting (108) an alarm signal at the end of the count.

2. Method (100) according to claim 1, wherein, when information identifying the glove (2) is acquired (102), the terminal (6) acquires a history of use of the glove (2); and, when an alarm signal is emitted (108), the terminal (6) indicates whether the glove (2) must be washed, and/or inspected, or discarded, according to the history acquired.

3. Method (100) according to either one of the preceding claims, wherein the step (101) consisting in associating the identification tag is performed using an optical reader.

4. Method (100) according to any one of the preceding claims, wherein the step (101) consisting in associating the identification tag is performed using an ultra high frequency transceiver.

5. Method (100) according to any one of the preceding claims, wherein, for one and the same glove (2), the method (100) is implemented by two terminals (6).

6. Assembly (1) for managing at least one glove (2), for implementing the method (100) according to any one of claims 1 to 6, the management assembly (1) comprising at least:
(i) a glove (2) comprising an identification tag (4);
(ii) at least one terminal (6) comprising a member (10) for detecting the identification tag (4) and comprising at least one screen (8) for displaying the use count and the selectable usage for the glove (2).

7. Assembly (1) according to claim 7, wherein the detection member (10) comprises an optical reader for reading the identification tag (4) of the glove (2) and associating it with the terminal (6) and/or comprises an ultra high frequency transceiver for detecting the identification tag of the glove (2) and associating it with the terminal.

8. Assembly (1) according to either one of claims 7 or 8, wherein the identification tag (4) of the glove (2) comprises a two-dimensional barcode and/or an ultra high frequency radio-identification chip.

9. Assembly (1) according to any one of claims 7 to 9, wherein the screen (8) of the terminal is an electronic-ink screen (8).

10. Assembly according to any one of claims 7 to 10, wherein the terminal (6) comprises a photovoltaic cell (14) and an electrical-energy reserve for supplying electricity to the terminal (6).

11. Computer program product comprising program code instructions for executing the method (100) according to any one of claims 1 to 6, when said instructions are executed by at least one processor (201).

12. Non-transient storage medium on which a computer program is stored comprising program code instructions for executing the method (100) according to any one of claims 1 to 6, when said instructions are read from said non-transient storage medium and executed by a processor (201).
